Europäisches Patentamt

(19) European Patent Office

Office européen des brevets

(11) Publication number: **0 158 601**
**A1**

(12) # EUROPEAN PATENT APPLICATION

(21) Application number: 85810156.1

(22) Date of filing: 10.04.85

(51) Int. Cl.⁴: **C 03 B 37/016**

(30) Priority: 12.04.84 CH 1833/84

(43) Date of publication of application:
16.10.85 Bulletin 85/42

(84) Designated Contracting States:
AT BE CH DE FR GB IT LI LU NL SE

(71) Applicant: BATTELLE MEMORIAL INSTITUTE
7 route de Drize
CH-1227 Carouge/Genève(CH)

(72) Inventor: Gonzalez-Oliver, Carlos
5, rue Pré-Jérome App. 41
CH-1205 Geneva(CH)

(72) Inventor: De Pous, Olivier
39 rue de la Terrassière
CHCH1207 Geneva(CH)

(74) Representative: Dousse, Blasco et al,
7, route de Drize
CH-1227 Carouge/Genève(CH)

(54) A method for fabricating preforms for drawn optical fibers.

(57) A porous glass web is contacted with, successively, glass powder liquid suspensions the refractive index of which varies stepwise in a pretermined manner, then the multilayer laminated structure obtained is treated with heat until it densifies into a monolithic preform with a gradient refractive index.

## A METHOD FOR FABRICATING PREFORMS

## FOR DRAWN OPTICAL FIBERS

The present invention concerns a method for fabricating optical fiber preforms embodying glass powder.

The use of glass powder for fabricating optical fiber preform is known per se. Thus glass powder can be agglomerated and hot densified until they provide monolithitic glass masses, these being used as preforms to be subsequently transformed by drawing into optical fibers.

It is also possible to deposit on a heated vitrified silica web at a relatively elevated temperature glass powder prepared in situ by the reaction of silicon halides and halides of other metals with reactive gases such as oxygen, hydrogen, water vapor and others. It is also possible to spray onto such heated web solutions of organo metallic reagents acting as glass precursors, such as silicon alkoxydes and other metal alkoxydes, the decomposition by heat of these reagents in the presence of solvents and reactive gases providing, at the surface of the web, a glass powder of controllable granulation according to the operating conditions. Subsequently, there is proceeded, as indicated above, to a hot densification of this powder into a monolithic glass mass, possibly in the presence of gases such as chlorine, $N_2$ or hydrogen so as to accelerate the dehydroxylation of the particles. Such methods are particularly indicated when it is desired to obtain a preform with a radially variable refractive index. Indeed, if the composition of glass powders (doping by oxydes of metals different from silica) which are deposited on a cylindrical web varies progressively in the course of the thickening of the deposited layer, there is obtained, after final densification, a glass matrix whose index varies as a function of the variation of the composition of the deposited powder. Naturally, the web can have any shape, solid cylinder or tube and, in this last case, the powder can be deposited on the internal surface thereof or on its external surface. If the coating concerns the inside surface, the variation of the powder composition corresponds to an increase of the doping rate, so that after densification, the glass has a refraction index higher at the center than at the outside (indeed, such distribution of the indexes in the fiber improves strongly the transmission efficiency of the signals in the fiber). If the coating concerns the external surface, it will be advantageous to use a strongly doped web and to deposit a powder whose doping ratio (for instance with germanium) is radially decreasing.

The following references will provide further details on these prior art techniques:

JP-57 191,237 (C.A. 98, 184409); JP-80 20,243 (C.A. 93, 136723); JP-80 23,067 (C.A. 93, 136726); JP-80 23,068 (C.A. 93, 136727); JP-80 23,066 (C.A. 93, 119106); PROC-EFOC 1980, 1st, 63-4 (C.A. 95, 229124); JP-81 14,437 (C.A. 95, 66582); JP-58 140,337; EP-A-86.132; JP-58 110,437; JP-58 104,039; JP-57 82,805; JP-57 38,329; JP-58 176,134; JP-58 64,234; JP-82 42,574; JP-56 73,640.

These methods, although very efficient, have however some drawbacks to which it is desirable to remedy. Thus, in the case where the coating involves powders generated by a reaction in the vapor phase or in a flame, or by spraying liquids at high temperature, it is necessary to use relatively complicated and expensive spraying apparatuses. When the compacting and sintering of prefabricated glass powders is involved, it is difficult to obtain preforms with radially variable refractive indexes unless special moulds are used. Thus, recently, a technique has been described according to which a cylindrical mould is used with two compartments, one of those being arranged concentrically with regard to the other (JP-80 71,637; C.A. 93 209,132). In order to fill these moulds, aqueous glass powder dispersion are used, the powder which forms the dispersion in the central mould having a refractive index higher than that of the powder used in the external mould. After elimination of the wall between the compartments, and partial concentration of the dispersions, the latter are converted into a gel which can be thereafter dried, evaporated and densified by heat according to usual means disclosed above.

This technique, although very interesting, does not enable however to provide a preform with a graded refractive index (the gradient having preferably a parabolic profile), unless the mould is provided with multiple concentric compartments which appears to be difficult to achieve constructionwise.

The method of the invention, such as disclosed in claim 1, remedies these drawbacks by embodying, for the build up of successive glass layers with a refractive index which varies according to a determined profile, a coating technique which consists in impregnating a glass or silica porous body by a suspension of glass particles in a liquid. This method is particularly interesting because it involves the deposition of layers whose texture is, because of the very nature of the method, in connection with that of the web or original matrix on which the coating is effected. Indeed, one of the problems in the art, when effecting the densification of multilayers substrates with glass powder for manufacturing optical preforms, is connected with the intimate structure (more exactly to the dimension of the pores) of the material which constitutes this laminate. If pores are too fine, the progressive densification of the porous substrate into monolithic glass by evaporation of volatile material is difficult and there exists risks for the formation of fissures by bursting. Until now, the control of the grain structure or porosity of these composite structures was little possible. The method of the invention removes such drawback because if it is indeed possible to control the porosity of the web, it is also possible to influence directly the texture of the coatings obtained by this technique, the degree of porosity of each layer being then controllable by acting on the operative parameters of the method. Besides, one of the notable advantages of the invention refers to the fact that, by reason of their porous structure, each new layer penetrates, by impregnation, into the previous one, which contributes to minimize the refractive index junction discontinuities during the densification of the preform (elimination of the stair-like jumps in the gradient index curve).

In the present process, the web is made of silica or porous glass which can be obtained by any known means (moulding, pressure sintering, "slip-casting" on a plaster preform, extrusion or also by spraying glass on a mandrel). The web constitutes advantageously a permanent part of the composite to be densified and, in such a case, the glass of which it is made has an appropriate refractive index, low if the web is a cylinder which it is to be internally impregnated with successive layers whose index rises progressively, high if the web is a plain cylinder which is to be externally coated with successive layers of progressively decreasing refractive index.

When there is provided a coating with several successive layers, the contacting of the substrate with a suspension of glass powder in a liquid ("slurry") is simply repeated more than once, the previous layer having been dried and consolidated by a thermal treatment and the refractive index of the powder of the new suspension being different from that of the powder of the previous layer. The succession of said layers with indexes varying according to a predetermined pattern consequently determines the radial profile of the index of the preform once the latter is terminated, including its final sintering. It is of course evident that the exact shape of this profile depends not only on the indexes of the different layers which compose the preform but also on the number and the thickness of the latter, which parameters can be easily ajusted during each operation as will be seen hereinafter. In the present method, it is possible to control the thickness of the sedimented powder layer between about 10 $\mu$m and 1 mm. The contacting of the web and the powder suspension can be made by dipping the web into the suspension or, if the latter is a hollow cylinder, by filling the inside of the tube with the suspension and by maintaining these in contact for a convenient time in order that a layer of desired thickness is formed by diffusion of the liquid into the porous mass and consecutive agglomeration of the powder. If the web is a plain cylinder, it is also possible to set it into rotation and to coat it by spraying its surface with the suspension of glass powder.

The glass powder, doped or not doped, which is used in the present method can be made by any known process (melting, chemical vapor deposition, vapor phase deposition or others). It is however preferred, for high purity glasses, to use a powder which is obtained from organo-metallic compounds which are decomposed by the usual methods already mentionned above and, more particularly, by the hydrolysis of metal alkoxydes (sol-gel technique). Thus, it is possible to use metal alkoxydes and proceed to the conversion thereof into oxydes by hydrolysis under well controlled conditions so as to convert them into oxyde particles of a determined grain size. It is possible, for instance, to spray an organic alkoxyde solution by means of a spraying pistol thus achieving droplets of known calibration and to hydrolyze these droplets in a moist atmosphere or also to spray this solution at the surface of a water mass maintained in agitation.

It is also possible to prepare a dispersion of an alkoxyde solution in a hydrocompatible solvent by agitating this solution in an inert medium, for instance a hydrocarbon insoluble in water, then slowing adding water to this dispersion (emulsion) so that the alkoxydes of each droplet of the discontinuous phase are hydrolyzed into solid particles of controlled dimensions, these particules being thereafter separated by filtration or centrifugation and finally hot densified.

The alkoxydes usable in this method are metal alkoxydes generally used for fabricating very pure glasses according to the methods called "sol-gel" methods (see for instance J. Mat. Sciences 13 (1978), 865 - 70; GB-A-2,084,990), theses methods being based on the controlled hydrolysis of metal alkoxydes and the polydehydrocondensation of the hydroxydes which are formed therefrom. Among such organo-metallic compounds, the following ethoxydes, methoxydes, isopropoxydes and other lower alkoxydes of Si, Al, B, Ge, Mg, Zr, Ca, Cs, Tl, etc.. can be mentionned. According to one embodiment, solutions of $Si(OEt)_4$ in alcohol are prepared with different proportions of $Ge(OEt)_4$, for instance of 1 to 10 moles%; these solutions are sprayed by mean of a spraying pistol into water where the particules of $SiO_2$ doped with germanium instantaneously form by hydrolysis. The powder thus generated is collected by filtration or centrifugation then it is dried, for instance by means of a fluidized bed in the presence of an inert or reactive gaz such as $N_2$, Ar, He, $H_2$, $Cl_2$, etc.. whose temperature varies from 100 to 500°C. The particles whose size can be varied at wish between about 10 and 500 $\mu$m are then dehydrated and converted into a glass powder with a doping ratio which varies as a function of the composition of the starting alkoxyde solution.

To achieve the suspensions (slurries) required for the embodying of the invention, the powder selected is suspended by agitation in a aqueous or non aqueous liquid. As aqueous liquids, water or aqueous solutions of hydrosoluble solvents such as methanol, ethanol, acetone, THF, dioxane, polyethylene glycol (PEG) and others can be used. The slurry can advantageously contain, in addition, a small proportion of binders enabling the hardening and the consolidation of the deposited layer and a deflocculating agent enabling to control viscosity of the dispersion and the rate of agglomeration of the particles. As binders, the following can be used: cellulose derivatives (hydroxy-, methyl- and carboxymethylcellulose) and olefinic derivatives (vinyl alcohol and the prepolymers thereof; acrylic prepolymers in emulsion, etc.). Preferably, the following binders can also be used, e.g. metal alkoxydes which, because they undergo gelation in the presence of the water of the liquid, will provide a phase which enables to consolidate the structure of the deposited coating. As deflocculating agents, one can use ionic and anionic surfactants such as for instance fatty acid soaps, alkylarylsulfonic acids (alkylbenzene or toluene sulfonic acid), and polyoxyalkylene glycols. The weight ratio of the binding and deflocculating agents with regard to the glass powder will advantageously be in the order of 0.01 to 2%.

As non aqueous liquids, organic solvents can be used such as acetone, alcohol, benzene, toluene, trichlorethylene, isopropanol, etc.. in the presence of binders such as polyacrylic esters or polyvinylbutyral resins and deflocculating agents such as glycerides of organosoluble synthetic surfactants.

One can also advantageously use as binders for the doped glass powders metal alkoxyde solutions whose chemical composition is identical with or different from that used for the synthesis of the glass powders by the "sol-gel" method. These alkoxydes which turn into a gel in the presence of water also penetrate by impregnation into porous silica before their gelation becomes effective. Consequently, the variation of the refractive index which normally depends on the deposition of successive glass powder layers whose doping ratio varies progressively can also result from a variation of the composition of the metal alkoxydes used as binders. Naturally, one can combine the various effects mentioned above and, for the formulation of these slurry compositions, it is possible to vary simultaneously the glass powder composition and that of the various binders previously mentioned including that of the alkoxydes which subsequently lead to the formation of a gel.

The relative proportions of the glass powder, of the other additives and of the liquids in the suspensions intended for the coating of webs "by impregnation" will determine to a certain extent the nature, the thickness and the properties of the various coatings obtained. The operating technique enables also to influence these parameters. Thus, for instance, longer is the contact time between the substrate and the suspension, and the thicker becomes the coating; in addition, by acting on the rate at which the excess of suspension is removed, it is possible to control the thickness of the coating. Generally speaking, one endeavours to maintain the level of the organic additives as low as possible although in a range compatible with the appropriate solidification of the coating after stage (b). Indeed, the smaller the amount of the additives foreign to the glass material, the easier their elimination during the densification phase. In general, additive proportions of the order of 0.01 to 2% by weight are sufficient. Naturally, if the binding additives are exclusively metal alkoxydes, for instance $Si(OEt)_4$ only, or as mixtures with other doping alkoxydes, the ethanol formed by hydrolysis is eliminated during the drying phase with the other solvents and, in this case, the proportions of alkoxydes can markedly exceed the 2% by weight limit with regard to the glass powder (or with regard to the total weight of the dispersion) and attain values of 5, 10, 15 and 20% or more.

In order to obtain the starting porous web, it is possible to use any method providing the texture and the form desired.

Thus, the porous web is constituted by an agglomerate of glass powder more or less doped or of silica powder of which the cohesion is sufficient for it to be practically manipulated.

For achieving such a porous web, it is for instance possible to compact the powder at low temperature according to the techniques generally used for shaping ceramics; It is also possible to extrude the web according to a desired form and eliminate the binder used before achieving by impregnation the successive layers which constitute the process of the present invention; it is also possible, in the case of a tubular web, to use a casting technique with a plaster mould (slip casting) or to spray by the plasma spraying technique glass powder on a mandrel. In this last case, the manufacture of the porous web is achieved by spraying the glass powder on the surface of a cylindrical bar subjected to rotation and possibly cooled during spraying by a stream of water. In order to enable the subsequent separation of the porous glass sheath thus obtained, the internal bar is coated with a film of a hydrosoluble mineral material, for instance an alcali metal salt; thus, it is possible to easily separate the sheath from the bar by dissolving the intermediate film in water.

Naturally, the cohesion of the porous web can be improved by partial sintering (open residual porosity) according to usual techniques (or any other method leading to the same kind of results).

Once the web has been coated by impregnation with a layer of powdery glass, and after having eliminated the excess of suspension, the layer is dried by usual means, for instance by allowing it to stand for a time (1-24 hours for instance) under a composition and temperature controlled atmosphere; during this time, the cohesion between the particles (due to the hardening of the binder) increases sufficiently for enabling subsequent manipulations thereof to be performed. Generally speaking, the drying temperature is comprised between 20 and 350°C in air or in an inert gas, subject or not subject to agitation, in order to accelerate the removal of the volatile solvents.

Once the powdery layer has sufficiently hardened so that the object can be manipulated easily, there is proceeded to the deposition of a new layer by repeating the above mentioned operations. Then a new drying step is undertaken and thereafter the same procedure is repeated.

When the desired number of layers has been attained, the final treatment of densification is undetaken by usual means which consists, as seen previously, to heat the preform slowly to minimize contraction and to lead to final condensation into a transparent homogeneous glass with no discontinuities or cracks. The structure is then visually homogeous although, naturally, the glass thus obtained has a refraction index which varies radially according to a determined profile. In order to effect such a densification, the composite is slowly heated in an inert or reactive atmosphere (He, Ar, Ne, $O_2$,

$H_2$, $Cl_2$, etc.. or mixtures of these gases) in order to complete the deshydroxylation and the total elimination of the organic materials alien to glass. In general, the heating rates are from 1 to several degrees per hour, the final temperatures being of the order of 900 to 1200°C.

The following examples illustrate the invention in more detail.

<u>Example 1</u>: Preparation of a glass powder doped with germanium.

The following material were intimately mixed by operating under a purified dustfree atmosphere: 312 g (1.5 moles) of $Si(OEt)_4$, 24.2 g (0.1 mole) of $Ge(OEt)_4$ and 400 ml of very pure ethanol. To this solution were further added 2.2 ml of acetylacetone and 0.5 ml of N HCl. This solution was thereafter atomized and sprayed by means of a spray pistol, calibrated for obtaining droplets of about 50 $\mu$m and the mist thus produced was projected into a vat full of water under agitation at room temperature and at an ammonia controlled pH of 8-9.

The droplets solidified in water due to hydrolysis of the alkoxydes and polycondensation of the hydrolysis product. After maintaining in agitation for about 30 min, the glass powder formed was drained on a glass filter and it was placed into a tube adapted to generate a fluidized bed by injection of a pressurized gas at the bottom part thereof. The powder was then maintained therein for about 5-6 hours under agitation in an oxygen stream at 375°C, this stream being optionaly completed by 10 to 20% (v/v) of chlorine for accelerating the dehydroxylation of the particles and the oxydation of the last traces of the organic matters still possibly present.

By repeating this example but incorporating into the mixture of the alkoxydes 1 ml of $NH_4OH$ N and by spraying this mixture into water at pH 5-6 (HCl), similar results were obtained.

The powder thus obtained was under the form of fine particles of size in the order of 30 to 60 $\mu$m constituted of silica (94 mole %) doped with $GeO_2$ (6 mole %).

A pure silica powder was prepared identically by using a solution identical with that described above but containing only ethyl

silicate and no tetraethyl germanate.

Example 2:

Preparation of a tubular matrix of porous silica.

A cylindrical stainless steel tube of about 10 mm diameter and 40 cm long was selected and this tube was rotated (about 100 rpm) between bearings provided with tight end joints and thus adapted to be circulated internally by a stream of a cooling or heating liquid. The tube was heated to 150°C and a mist of particles generated by the atomization of an aqueous solution of 300 g/l of NaCl was sprayed, by means of a spraying pistol, on the rotating tube. There was thus obtained thereon an even film of powdered NaCl of fine texture and of a thickness of the order of 10 to 50 $\mu$m. The tube was thereafter cooled to 15°C by a circulating stream of water and, while maintaining it in rotation, silica powder (of the type described in the previous example) was sprayed on its surface in a series of horizontal passes, by means of a plasma pistol. The operating conditions were the followings: 500 A; 60-70 V; ionized gas $N_2/H_2$ (80/15, v/v); gas flow: about 1 standard $m^3$ per hour; rate flow of the powder: about 2.2 kg per hour; distance of projection 5-10 cm; time of projection 3-5 min.

There was thus obtained a porous glass sheath about 2-3 mm thick, the yield of coating being 20 to 30%.

The tube covered with the sheath of silica was dipped into water, the sheath being released after a few minutes due to of the dissolution therein of the intermediate film of NaCl.

Example 3:

Deposition of a glass powder coating on the inside surface of a porous glass tubular web.

A suspension of 40 g of glass powder doped with germanium was prepared according to the description of example 1 in 80 ml of a mixture 65/35 (v/v) of ethanol and water containing 4 g of $Si(OEt)_4$ and

0.4 g of PEG 400. A tube of porous silica obtained according to example 2 was filled with this suspension and, after 5 min rest at room temperature, the excess of suspension was allowed to slowly run out from the bottom of the tube this effect being obtained by providing a very small opening at the lower end of the tube. The tube was allowed to dry in air for 24 hours, after which a slow current of oxygen was circulated therein at a temperature which was progressively raised in 10 hours to 600°C.

Then the tube was placed in a furnace and its temperature was raised slowly (3°C per hour) by circulating therein a mixture $He/Cl_2$ 80/20 (v/v) until the value of 1050°C is attained. After cooling, it was noticed that the tube was entirely converted by densification into a tubular transparent monolithic form.

This tube was used for preparing, by hot drawing according the usual means, an optical fibre whose core had a refractive index higher than that of the periphery.

Example 4:

Preparation of an optical fibre with graded refractive index.

The previous example was repeated with the following differences: after application of a first layer of powder doped with 3 mole % of $GeO_2$, drying was effected for 12 hours by progressively raising the temperature up to 350°C. The coating treatment was thereafter repeated by impregnation with a silica suspension doped with 6 mole % of $GeO_2$ (powder of example 1) then, after a new drying stage, it was once more impregnated by means of a powder doped with 10 mole % of $GeO_2$.

After drying, hardening and densification as in example 3, there was obtained a tube comprising a sheath and 3 internally concentric successive glass layers whose index increases toward the center. After melt-drawing this preform, there was obtained a glass fibre whose index varies radially correspondingly.

- 12 -                    0158601

C L A I M S

1. Method for fabricating optical preforms which can be drawn to provide optical fibers with graded refractive index, characterized in that: (a) a silica or porous glass web, in the form of a cylinder or a tube, it contacted with a suspension or dispersion of a glass powder in a liquid so that the latter is impregnated by absorption in at least part of the porous mass and also forms, by deposition on at least part of the external surface of this web, a coating comprised of essentially agglomerated glass particles then, after eliminating the excess of suspension, (b) the coating thus deposited is dried in order to be consolidated and, finally (c) it is progressively heated so that the laminate thus obtained densifies progressively and transforms itself finally into a monolitic glass mass which constitutes said preform.

2. Method according to claim 1, characterized in that the refractive index of the glass of the web is different from that of the glass of the powder layer supplied by impregnation, the obtained preform being composed then of a core with a higher refractive index and a cladding with a lower refractive index.

3. Method according to claim 1, characterized in that before effecting said (c), the performing of steps (a) and (b) is repeated at least once by using each time a glass powder of different refractive index, so as to achieve a multilayer laminate and, after densification, a preform with a graded refractive index.

4. Method according to claim 1, characterized in that the thickness of the layer which forms over the porous body is comprised between 10 and 500 µm after drying.

5. Process according to claim 1, characterized in that said suspension or dispersion contains, as binding additive, one or several metal alkoxydes, the latter providing by hydrolysis a gel which imparts sufficient mechanical stability to the coating of agglomerated particles.

6. Process according to claim 5, characterized in that the binder itself is transformed finally into a glass during the subsequent thermal treatments.

7. Process according to claim 1, characterized in that said impregnation is achieved by dipping the web into the glass powder suspension, or by introducing this suspension into the internal cavity of the web, or still by spraying this suspension onto the external surface thereof.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | GB-A-1 473 779  (GENERAL CABLE CORPORATION)<br>* Claims 13,14 * | 1,2,7 | C 03 B  37/016 |
| X | FR-A-2 227 234  (DE MACEDO)<br>* Claims 6,9,11-14,16,17 * | 1,2,7 | |

**TECHNICAL FIELDS SEARCHED (Int. Cl.4)**

C 03 B   37/00
C 03 C   23/00

The present search report has been drawn up for all claims

| Place of search | Date of completion of the search | Examiner |
|---|---|---|
| THE HAGUE | 31-05-1985 | VAN DEN BOSSCHE W.L. |